# EUROPÄISCHE PATENTSCHRIFT

(11) **EP 3 072 657 B1**
(45) Veröffentlichungstag und Bekanntmachung des Hinweises auf die Patenterteilung: **30.08.2017**
(21) Anmeldenummer: 15160732.2
(22) Anmeldetag: 25.03.2015
(51) Int. Cl.: B29B 11/16, D04H 3/12, D04H 11/00

(54) **VERFAHREN UND VORRICHTUNG ZUM HERSTELLEN EINES FASERHALBZEUGS**
METHOD AND DEVICE FOR MANUFACTURING A SEMI-FINISHED FIBRE PRODUCT
PROCÉDÉ ET DISPOSITIF DE FABRICATION D'UN SEMI-PRODUIT EN FIBRES

(43) Veröffentlichungstag der Anmeldung: 28.09.2016
(73) Patentinhaber: Compositence GmbH, 71229 Leonberg (DE)
(72) Erfinder: Witzel, Volker, 74369 Löchgau (DE); Karb, Ingo, 71287 Weissach (DE)
(74) Vertreter: Kramer Barske Schmidtchen Patentanwälte PartG mbB

(56) Entgegenhaltungen:
- WO-A1-2013/040618
- DE-A1-102009 044 834
- US-A1- 2008 289 743

## Beschreibung

Die Erfindung betrifft ein Verfahren und eine Vorrichtung zum Herstellen eines Faserhalbzeugs.

Faserhalbzeuge werden bei einem gängigen Verfahren aus vergleichsweise teurer Endlosware in der gewünschten Form zugeschnitten. Die Endlosware ist als Gewebe oder Gelege ausgebildet und es entsteht ein kostenintensiver Verschnitt.

Nach einem anderen gängigen Verfahren erfolgt ein endkonturtreues Ablegen der Fasern z.B. in Form einer oder mehrerer Rovings durch von Robotern geführte Legeköpfe. Ein derartiges Verfahren ist aus der WO2011/128110 A1 bekannt.

Aus der EP 2 138 615 A1 ist ein Verfahren zum Herstellen eines multiaxialen Geleges bekannt, bei dem im Wesentlichen unverbundene Fasern zu Segmenten abgelängt werden und diese Segmente zur Herstellung des multiaxialen Geleges abgelegt werden. Auch bei diesem Verfahren entsteht erheblicher Verschnitt.

Aus der WO 2012/031723 A1 ist ein Verfahren zum Herstellen eines Faserhalbzeugs bekannt, bei dem ein Multiaxialgelege wie folgt hergestellt wird. Das Faserhalbzeug in Form eines Multiaxialgeleges wird beispielsweise aus vier Faserlagen, die auch als Gelege oder Patches bezeichnet werden, hergestellt. Jedes Patch enthält Fasern (Rovings), die parallel verlaufen. Jedes Gelege wird in einem Modell in Streifen gleicher Breite unterteilt. Anschließend werden diese Streifen aus entsprechend abgelängten und abgelegten Rovings hergestellt, dann die abgelegten Streifen zu dem Gelege bzw. Patch zusammengeführt, und danach die Gelege/Patches zu dem multiaxialen Gelege (Stack) aufeinandergestapelt. Dieses Verfahren erfordert eine sehr hohe Präzision beim Aneinanderlegen der Streifen. Die WO 2013/040618 A1, US 2008/289743 A1 und DE 10 2009 044 834 A1 offenbaren weitere Techniken zur Herstellung von Faserhalbzeugen.

Aufgabe der Erfindung ist es, ein Verfahren und eine Vorrichtung zum Herstellen eines Faserhalbzeugs anzugeben, die einerseits kostspieligen Verschnitt vermeidet und andererseits zuverlässig mit vergleichsweise hoher Geschwindigkeit die Herstellung von Faserhalbzeugen erlaubt.

Diese Aufgabe wird gelöst durch ein Verfahren nach Anspruch 1 bzw. eine Vorrichtung nach Anspruch 9.

Weiterbildungen der Erfindung sind in den abhängigen Ansprüchen angegeben.

Die Verwendung von Durchläuferfäden ermöglicht ein schnelles und sicheres Ablegen, Greifen und Stapeln der Gelege.

Die Verwendung von sensorischer wie z.B. visueller Kontrolle und eines Backupablagesystem ermöglicht eine hohe Fehlertoleranz.

Das Drucken von Kontur oder Fläche oder Matrix ermöglicht einen hohen Produktivitätszuwachs.

Das Verwenden zweier Ablagesysteme mit jeweils mehreren Ablageköpfen ermöglicht einerseits eine hohe Fehlertoleranz und andererseits eine Wartung ohne Unterbrechung der Produktion.

Die Verwendung eines Laufbandes ermöglicht eine selektive Beeinflussung der abgelegten Gelege/Patches in verschiedenen Zonen des Laufbandes.

Die Verwendung der Durchläuferfäden ermöglicht zusätzlich zu ihren Funktionen bei der Handhabung der Patches bei der Herstellung des Faserhalbzeugs darüberhinausgehende eigene Funktionen in dem Halbzeug oder einem finalen Bauteil.

Weitere Merkmale und Zweckmäßigkeiten ergeben sich aus der Beschreibung von Ausführungsbeispielen anhand der Figuren.

Von den Figuren zeigen:
- Fig. 1: in a) eine schematische Draufsicht auf einen Teil einer Vorrichtung zum Herstellen eines Faserhalbzeugs nach einer Ausführungsform der Erfindung in schematischer Ansicht, und in b) eine schematische Seitenansicht eines Förderbandes;
- Fig. 2: eine schematische Draufsicht auf die Vorrichtung nach der Ausführungsform aus Fig. 1 mit einer Darstellung zweier Tische;
- Fig. 3: in a) bis d) eine schematische Darstellung des Abnehmens und Stapelns von Gelegen;
- Fig. 4: eine schematische Darstellung der gleichzeitigen Herstellung von Gelegen und der Verwendung von geteilten Tischen;
- Fig. 5: eine schematische Darstellung weiterer Möglichkeiten von geteilten Tischen in a) und b);
- Fig. 6: eine schematische Darstellung eines Laufbandes mit einer Kontur und mit einem Gelege;
- Fig. 7: eine schematische Darstellung eines Laufbandes mit Gelege und einer Durchläuferfäden-Haltevorrichtung;
- Fig. 8: eine schematische Darstellung eines Stapels auf einem Tisch;
- Fig. 9: eine schematische Darstellung eines Stapels als MAG, und
- Fig. 10: eine schematische Querschnittsansicht einer Manipulations-Greifer-Einheit.

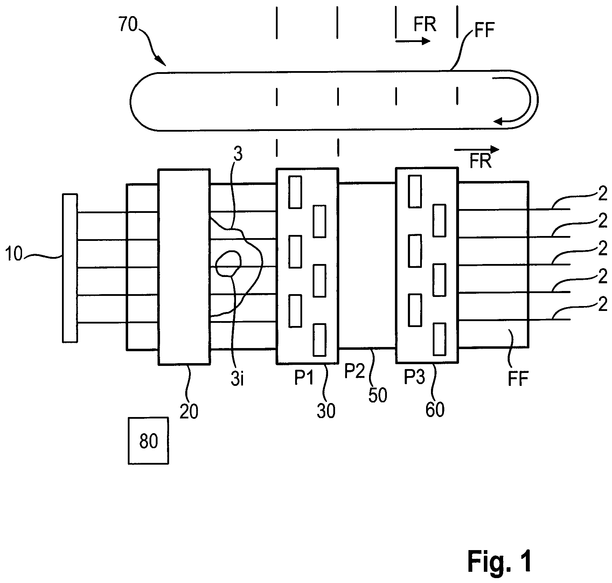

In Fig. 1 a) ist eine schematische Draufsicht auf einen Teil einer Ausführungsform einer Vorrichtung zum Herstellen eines Faserhalbzeugs nach einer Ausführungsform der Erfindung gezeigt.

Die Vorrichtung weist eine Durchläuferfaden-Zufuhrvorrichtung 10, einen Drucker 20, eine erste Faserablagevorrichtung 30, ein Sensorfeld 50, eine zweite Faserablagevorrichtung 60, ein Förderband 70 und eine Steuervorrichtung 80 auf, die zum Steuern der zuvor genannten Teile angepasst ist, auf.

Die Durchläuferfäden-Zufuhrvorrichtung 10 führt eine Mehrzahl von Durchläuferfäden 2 in einer Förderrichtung FR parallel und in einem vorbestimmten Abstand voneinander auf die obere Oberfläche des Förderbandes 70 zu. Die obere Oberfläche ist eine Förderfläche FF, die mit einer vorbestimmten Geschwindigkeit in der Förderrichtung FR bewegt wird. Die Durchläuferfäden 3 können auch als Greiffäden bezeichnet werden. Die Durchläuferfäden sind Fasern, Garne oder Rovings aus einem geeigneten Material wie Recyclingcarbon, Glas, Aramid oder ähnlichem.

Der vorbestimmte Abstand der Durchläuferfäden 2 kann je nach Anwendung gewählt werden und ist bevorzugt gewählt aus einem Bereich von 1 bis 5 cm und noch bevorzugter aus einem Bereich von 1 bis 10 cm, wie zum Beispiel 1, 2, 3, 4 oder 5 cm. Das Förderband wird mit einer Geschwindigkeit im Bereich von 1 bis 4 m/s, bevorzugter 2 bis 3 m/s, also zum Beispiel 1, 2, 3 oder 4 m/s in Förderrichtung FR bewegt.

In Förderrichtung FR stromabwärts der Durchläuferzufuhrvorrichtung 10 ist ein Drucker 20 oberhalb der Förderfläche FF vorgesehen. Der Drucker 20 ist dazu angepasst, Konturen oder Flächen auf die Förderfläche FF zu drucken. Als Substanz zum Drucken können Kleber, Binder, Matrixmaterial für Faserverbundwerkstoffe und ähnliches verwendet werden.

In Förderrichtung FR stromabwärts des Druckers 20 ist eine erste Faserablagevorrichtung 30 oberhalb der Förderfläche FF angeordnet. Zur Vereinfachung der Beschreibung wird die Position der Faserablagevorrichtung 30 in Vorschubrichtung FR als erste Position P1 bezeichnet. Die Faserablagevorrichtung ist zum Ablegen von Fasern für Faserverbundwerkstoffe geeignet. Der Begriff Faser bezeichnet in der vorliegenden Anmeldung, wie im vorliegenden technischen Gebiet üblich (siehe EP 2 138 615 A1 [0032] oder WO 2011/128110 A1, Seite 1, 2. Absatz) Fäden, Bündel, Rovings, etc. die aus einer Mehrzahl von Filamenten aus Kohlenstoff, Aramid und ähnlichen Fasermaterialien für Faserverbundwerkstoffe bestehen. Die Zahl der Filamente reicht von einigen wenigen Filamente wie 8 oder 10 bis zu 50000 Filamenten und mehr. Die Filamente dieser Fäden, Bündel, Rovings können verdrillt oder unverdreht sein. Soweit in dieser Anmeldung nicht ausdrücklich etwas anderes genannt wird, bezeichnet der Begriff Faser nachfolgend einen solchen Faden oder eine solches Bündel oder ein solches Roving, außer wenn ausdrücklich auf einzelne Filamente Bezug genommen wird.

Die Faserablagevorrichtung 30 ist zum Zuschneiden (Ablängen) solcher Fasern und zum Ablegen solcher abgelängter Fasern auf die Förderfläche FF unter Steuerung durch die Steuerung 80 angepasst. Stromabwärts der ersten Faserablagevorrichtung 30 ist das Sensorfeld 50, bevorzugt mit Sensoren in der Form von Kameras, in einer zweiten Position P2 oberhalb der Förderfläche FF vorgesehen. Alternativ zu oder zusätzlich zu den Kameras können andere Sensoren wie zum Beispiel Fotozellen, Lichtschranken, etc. vorgesehen sein. In Förderrichtung FR stromabwärts des Sensorfeldes 50 ist eine zweite Faserablagevorrichtung 60 oberhalb der Förderfläche FF vorgesehen. Die Faserablagevorrichtung 60 ist vorzugsweise baugleich mit der ersten Faserablagevorrichtung 30. Die zweite Faserablagevorrichtung ist in einer dritten Position P3 stromabwärts der zweiten Position P2 vorgesehen.

Die Faserablagevorrichtungen 30, 60 weisen eine Mehrzahl von Modulen 31,61 auf. Jedes der Module 31, 61 weist eine Breite quer zur Förderrichtung FR auf, die einen vorbestimmten Bruchteil der Gesamtbreite der Förderfläche FF darstellt. Die Module 31, 61 sind, wie in Fig. 1 gut zu erkennen ist, in zwei Reihen alternierend quer zur Förderrichtung FR angeordnet. In Förderrichtung FR gesehen überdecken sich die Breiten der alternierend in den beiden Reihen angeordneten Module derart, dass die gesamte Breite oder ein bestimmter Teil der Breite der Förderfläche FF durchgehend mit Fasern belegt werden kann. Die Module 31, 61 sind mit der Steuerung 80 verbunden und jeweils einzeln durch die Steuerung 80 ansteuerbar. Die Module 31,61 können jeweils separat ausgetauscht werden. Das führt dazu, dass einzelne Module im laufenden Betrieb ausgetauscht werden können, ohne dass der entsprechende Teil der Breite des Förderbandes 70 nicht mit Fasern belegt werden könnte.

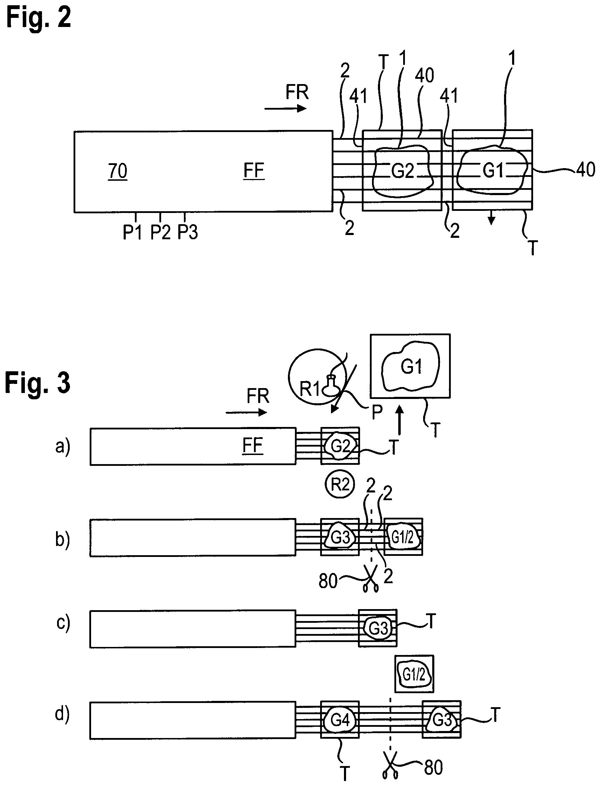

In Fig. 2 ist schematisch eine Draufsicht auf die Ausführungsform der Vorrichtung gezeigt. Von dem in Fig. 1 gezeigten Teil der Ausführungsform ist in Fig. 2 auf der linken Seiten lediglich das Transportband 70 mit der Förderfläche FF und den Positionen P1, P2, P3 schematisch gezeigt. Stromabwärts in Förderrichtung FR des Förderbandes 70 sind in Fig. 2 auf der linken Seite zwei Tische T gezeigt. Die Tische weisen auf ihren in Förderrichtung FR vorne und hinten befindlichen Seiten Haltevorrichtungen 40, 41 zum Halten der Durchläuferfäden 2 auf Auf den Tischen T sind von der Förderfläche FF abgenommene Gelege 1 zu sehen, die als G1 und G2 bezeichnet sind.

In Fig. 3 ist in der Abfolge der Darstellungen in a) bis d) gezeigt, wie Tische T der in Fig. 2 gezeigten Art mit darauf abgelegten Gelegen G1, G2, G3, G4 bewegt werden können. Wie in Fig. 3 a) gut zu erkennen ist, ist in Förderrichtung FR stromabwärts der Förderfläche FF links und rechts jeweils einen als Roboter R1, R2 ausgebildete Handhabungseinheit ausgebildet. Diese Handhabungseinheiten R1, R2 sind zum Aufnehmen von Gelegen 1, G1 von einer Ablagefläche auf einem Tisch T und zum Ablegen eines derart ausgenommenen Geleges 1, G1 auf die Ablagefläche eines anderen Tisches T geeignet, wie in Fig. 3a) schematisch zu durch den Pfeil P angedeutet ist.

In Fig. 3 b) und d) ist schematisch eine Schneidevorrichtung 80 zum Schneiden der Durchläuferfäden 2 gezeigt. Diese ist in mindestens einer Position stromabwärts des Förderbandes FF vorgesehen.

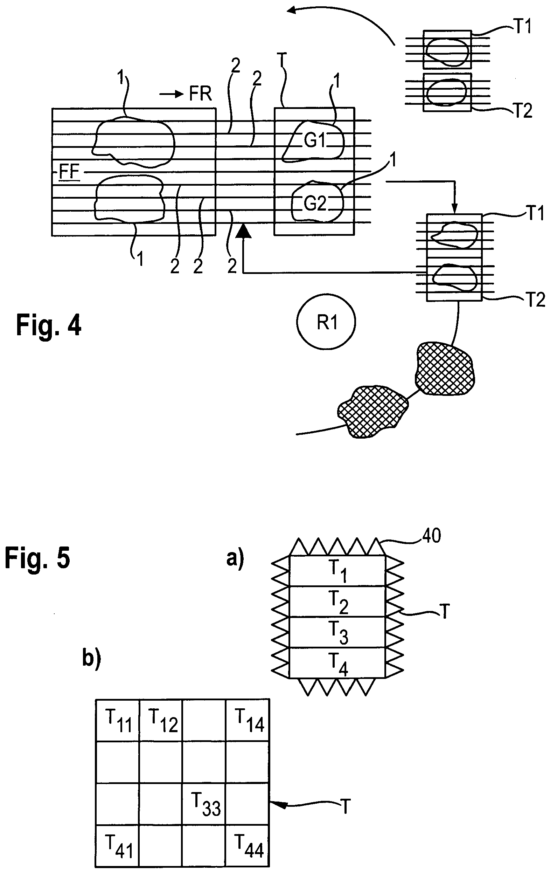

In Fig. 4 ist in einer schematischen Draufsicht das in Förderrichtung FR stromabwärts gelegene Ende der Förderfläche FF mit zwei abgelegten Gelegen 1 gezeigt. Stromabwärts der Förderfläche FF ist ein Tisch T mit zwei weiteren Gelegen 1, G1, G2 gezeigt.

Links in Fig. 4 ist schematisch dargestellt, dass der Tisch T optional in Teiltische T1, T2 teilbar ist. Bei der in Fig. 4 gezeigten Ausführungsform ist der Tisch T senkrecht zur Förderrichtung FR in die Teiltische Ti (i = 1,2, 3, ...) teilbar.

In Fig. 5 a) ist eine solche Variation mit i = 4 gezeigt. Dabei sind schematisch Durchläuferfädenhaltevorrichtungen 40 an den Rändern dargestellt. Diese Durchläuferhaltevorrichtungen 40 sind zum Beispiel als Greifer ausgebildet, die um jeden Teiltisch T1 herum vorgesehen und selektiv versenkbar sind.

In Fig. 5 b) ist eine schematische Draufsicht auf einen Tisch T, der matrixartig in Teiltische Tᵢⱼ (i = 1, 2, 3...; j = 1, 2, 3...) unterteilbar ist, gezeigt.

Allen Tischen gemeinsam ist die bevorzugte Option, den Rändern der Tische Greifvorrichtungen 40 zum Greifen von Durchläuferfäden 2 vorzusehen.

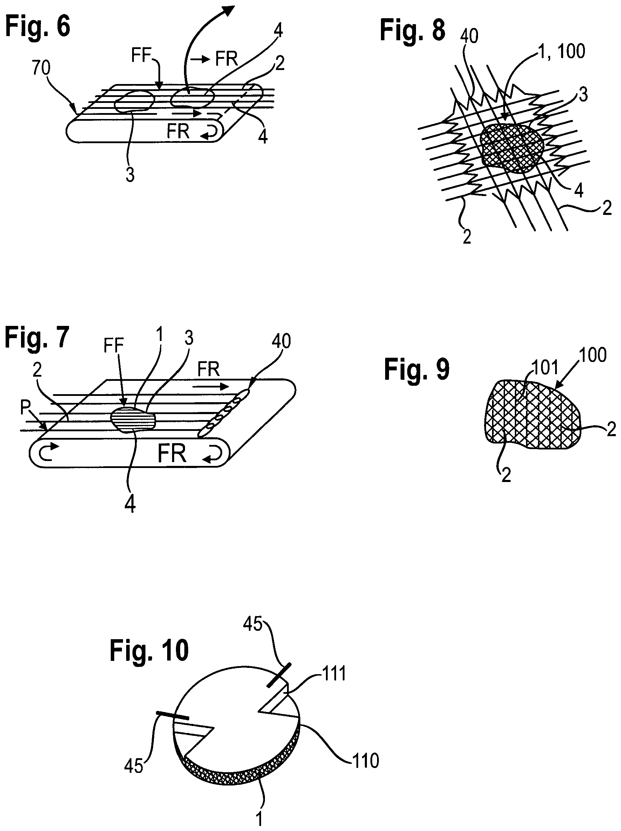

In Fig. 6 ist ein Laufband 70 mit Förderfläche FF in einer schematischen Perspektivansicht zu sehen. Gut zu erkennen ist eine aufgedruckte Kontur 3 und stromabwärts entsprechend der Kontur 3 abgelegte, abgelängte Fasern 4.

In Fig. 7 ist wiederum eine schematische perspektivische Ansicht des Laufbandes 40 mit der Förderfläche FF zu sehen, mit darauf abgelegten Gelege 1 mit Fasern 4 entsprechend der Kontur 3. Im stromabwärtsseitigen Ende des Förderbands 70 ist schematisch eine Durchläuferfäden-Haltevorrichtung 40 mit einer Mehrzahl von Greifern zum Greifen der Durchläuferfäden 2 gezeigt.

In Fig. 8 ist eine schematische Draufsicht auf die Oberfläche eines Tisches T mit einem darauf abgelegten Stack (MAG) 100 aus mehreren Gelegen (Patches) 1 gezeigt, wie an der unterschiedlichen Orientierung der Durchläuferfäden 2 gut zu erkennen ist, sind die Fäden 4 der verschiedenen Gelege 1 entsprechend des gewünschten Stacks bzw. multiaxialen Geleges (MAG) orientiert. Diese Orientierung lässt sich mit einfacher Weise mittels der Handhabungsvorrichtungen (R1, R2) erzielen, dass diese die Gelege unter Steuerung durch die Steuerung 80 vorbestimmten Orientierung ablegen können, wie später beim Verfahren erläutert wird.

In Fig. 9 ist ein Faserhalbzeug 100 in Form eines MAG gezeigt. Die Fasern 4 sind, anders als die in dem MAG belassenen Durchläuferfäden, nicht dargestellt. Schematisch dargestellt sind Nähte 101 mit denen das MAG in bekannter Art fixiert sein könnte.

Fig. 10 ist eine Manipulations-Greifer-Einheit 110. Die Manipulations-Greifer-Einheit 110 weist einen rollenförmigen Körper auf. In Längsrichtung des Rollenkörpers sind im Umfang zwei Schlitze 111 vorgesehen. Auf einer Seite jedes Schlitzes sind Fänger 45 vorgesehen, die dazu angepasst sind, Durchläuferfäden 2 am stromabwärtsseitigen Ende der Förderfläche FF zu fangen. In den Schlitzen sind Greifer vorgesehen, die die vom Fänger 45 gefangenen Durchläuferfäden 2 greifen und so die in Fig. 10 gezeigten Art ein von der Förderfläche FF zu der Manipulations-Greifer-Einheit 110 gefördertes Gelege 1 von der Förderfläche FF abzunehmen und auf die Umfangsfläche der Rolle aufzurollen und dort durch Spannen der Durchläuferfäden 2 zu halten. In Fig. 10 unten ist ein derart aufgerolltes Gelege 1 im Querschnitt dargestellt.

Die Funktionsweise der beschriebenen Vorrichtung wird beschrieben. Die Vorrichtung dient zum Herstellen von Faserhalbzeugen, vorzugsweise von Faserhalbzeugen in Form von multiaxialen Gelegen (MAG), die aus mehreren Faserlagen (Patches) 1 bestehen, die zur Ausbildung eines Stacks 100 aufeinandergestapelt werden. Das Herstellen solcher Stacks ist grundsätzlich bekannt. Anders als im Stand der Technik ermöglicht die Vorrichtung dass die Verwendung von Durchläuferfäden 2. Diese Durchläuferfäden 2 können von der Durchläuferfäden-Zufuhrvorrichtung 10 mit einem über die Steuerung 80 einstellbaren Abstand parallel auf die Förderfläche FF gelegt und in Zusammenwirken mit ebenfalls durch die Steuervorrichtung 80 gesteuerten Durchläuferfäden-Haltevorrichtungen 40 unter Spannung gehalten werden.

Der Drucker 20 kann unter Steuerung durch die Steuerung 80 freiwählbare Konturen 3 auf die Förderfläche FF drucken. Es ist auch möglich, mittels des Druckers über die Konturen hinaus die Flächen oder Flächenbereiche der Konturen zu bedrucken. Das führt dazu, dass auf die Förderfläche FF mit den darunterliegenden Durchläuferfäden 2 ein Material aufgedruckt werden kann, mittels dessen die nachfolgend durch die Faserablagevorrichtungen 30 bzw. 60 abgelegten Fäden in der Kontur fixiert werden können. Da die Kontur auf der Förderfläche aufgebracht ist, können die vorzugsweise trockenen Fasern mit der, abhängig von der Ausbildung der Faserablagevorrichtungen, maximalen Geschwindigkeit abgelegt werden. Grundsätzlich ist das Vorsehen einer Faserablagevorrichtung 30 ausreichend.

Das Vorsehen des Sensorfeldes 50 und der zweiten Faserablagevorrichtung 60 ist aus Gründen der Qualitätssicherung und Redundanz aber bevorzugt.

Je höher die Geschwindigkeiten sind, desto wahrscheinlicher ist es, dass beim Ablegen der Fasern 4 durch die erste Faserablagevorrichtung 30 ein Fehler auftritt. Mittels des Sensorfeldes, also zum Beispiel der Kameras, kann unter Steuerung durch die Steuerungsvorrichtung 80 direkt stromabwärts der Faserablagevorrichtung 30 ein solcher Fehler detektiert werden. Die Steuerungsvorrichtung 80 kann dann die zweite Faserablagevorrichtung 60 anweisen, zum Beispiel fehlende oder verrutschte Fasern durch teilweises Wiederholen der Faserablage in das Gelege 1 einzubringen. Daher ist es möglich selbst bei Auftreten von Fehlern ohne Unterbrechung des Produktionsprozesses ein Gelege zu ergänzen bzw. zu reparieren. Das führt dazu, dass die Quote des Ausschusses ganzer Stacks stark reduziert werden kann.

Stromabwärts des Endes der Förderfläche FF sind Vorrichtungen vorgesehen, mittels derer einerseits Durchläuferfäden 2 unter Spannung gehalten werden können und mittels derer andererseits die gelegten Gelege 1 von der Förderfläche FF abgenommen und weiterverarbeitet werden können.

Diese sind zum Beispiel in Fig. 10 gezeigte Manipulations-Greif-Einheiten 110 und/oder die Tische T, Tᵢ, Tᵢⱼ der in den Fig. 2, 3, 4, 5 gezeigten Art. Durchläuferfäden-Haltevorrichtungen 40 sind an diesen Tischen vorgesehen. Zum Zwecke des Spannens der Durchläuferfäden für die Übergabe an diese Vorrichtungen kann, wie in Fig. 7 schematisch dargestellt ist, auch eine von diesen Vorrichtungen unabhängige Durchläuferfäden-Haltevorrichtung 40 zum Spannen der Durchläuferfäden 2 am stromabwärts gelegene Ende der Förderfläche FF vorgesehen sein. Mittels dieser Vorrichtungen ist es möglich, die Gelege 1, G1, G2, G3, G4 von der Förderfläche FF abzunehmen. Beispielhaft wird unter Bezugnahme auf die Fig. 2 und 3 dieser Vorgang für einen Tisch T beschrieben.

Der Tisch T wird abwärts des Endes der Förderfläche FF positioniert. Der Tisch kann dabei vorzugsweise gegenüber der Ebene der Förderfläche FF abgesenkt sein. Die Durchläuferfäden 2 werden am stromabwärts gelegenen Ende der Förderfläche FF von einer Haltevorrichtung 40 des Tisches übernommen und unter Spannung über die Oberseite des Tisches geführt. Bei dem in Fig. 2 gezeigten Beispiels sind zwei Tische T oder auch ein Tisch T der in Förderrichtung FR in zwei Teiltische T₁, T₂ teilbar ist, positioniert. Zwei hintereinander auf der Förderfläche FF befindliche Gelege werden, an der Unterseite gestützt durch die Durchläuferfäden 2 vom Ende der Förderfläche FF abgezogen und auf den Tischen T abgelegt. Dabei werden die Tische gegebenenfalls angehoben und die in Förderrichtung FR stromaufwärts und stromabwärts gelegenen Enden der Durchläuferfäden 2 von den entsprechenden Haltevorrichtungen 40, 41 gegriffen. Mittels der in Fig. 3 b) gezeigten schematischen Schneidevorrichtung 80 kann dann zum Beispiel auf der in Förderrichtung FR stromaufwärts gelegenen Seite des ersten Tisches G die Durchläuferfäden 2 auf der stromaufwärtsgelegenen Seite des Geleges G1 getrennt werden. Der Tisch T kann dann nach links, rechts oder woandershin bewegt werden.

Auf die Einzelheiten des Greifens und des Bewegens kommt es nicht an. Entscheidend ist, dass die Durchläuferfäden über einen mit einem vorbestimmten Maß über die Kontur 3 des Geleges überstehen und somit die weitere Handhabung des Geleges 1, G1 mit großer Geschwindigkeit ermöglichen. Durch die Kontur 3 werden die Fasern 4 des Geleges 1, G1 in der abgelegten Position gehalten. Die Zahl der Handhabungseinheiten R1, R2 hängt vom Verhältnis der möglichen Handhabungsgeschwindigkeit der Gelege 1, G1, G2, G3, G4 stromabwärts der Förderfläche FF und der Fördergeschwindigkeit des Förderbandes 70 ab. Falls zum Beispiel die mögliche Handhabungsgeschwindigkeit die Hälfte der Fördergeschwindigkeit ist, dann kann mit zwei Handhabungseinheiten R1, R2 die Handhabung der Gelege bewerkstelligt werden. Falls die mögliche Handhabungsgeschwindigkeit nur ein Viertel der Fördergeschwindigkeit ist, müssen mindestens vier Handhabungseinheiten vorhanden sein, usw.

Da die Kontur der herzustellenden Halbzeuge oder auch die Kontur der einzelnen Gelege eines Stacks variieren kann, die Breite des Förderbandes aber mindestens für eine Vorrichtung festgelegt ist, gibt es Situationen, in denen die Breite des Förderbandes und die Zahl der Module der Faserablagevorrichtung 30, 60 schlecht ausgenutzt ist. In einem solchen Fall können mehrere Gelege gleichzeitig abgelegt werden, wie in Fig. 4 schematisch dargestellt ist. Die Mehrzahl der Gelege wird dann in einer Richtung senkrecht zu der Förderrichtung FR nebeneinander abgelegt. Die derart gleichzeitig produzierten Gelege können entweder identische Konturen oder unterschiedliche Konturen aufweisen, je nach Anwendung. Insbesondere für den Fall des gleichzeitigen Herstellens mehrerer Gelege bietet es sich an, einen Tisch T in einer in einer Richtung senkrecht zu der Förderrichtung FR unterteilbaren Weise auszubilden, wie es in Fig. 4 ebenfalls schematisch dargestellt ist. Dort werden zwei Gelege G1 und G2 gleichzeitig hergestellt, und die Tische T sind dementsprechend in zwei Tische T₁ und T₂ unterteilt.

Bei der gleichzeitigen Herstellung von vier Gelegen böte sich ein Tisch mit vier Teilen T1 bis T4 an, wie er in Fig. 5 a) gezeigt ist.

Je nach Anwendung können auch matrixartig unterteilbare Tische verwendet werden, wie sie in Fig. 5 b) gezeigt sind.

Mit einer derart gestalteten Vorrichtung, aber auch mit einer anderen Vorrichtung zum Herstellen von Faserhalbzeugen lässt sich daher das nachfolgend beschriebene Herstellungsverfahren für Faserhalbzeuge ausführen.

Zunächst werden parallel und in einem Abstand voneinander befindlichen Durchläuferfäden 2 auf einer Förderfläche FF abgelegt. Die Förderfläche FF bewegt sich mit einer vorbestimmten Geschwindigkeit auf die Förderfläche mit den darauf abgelegten Durchläuferfäden 2 wird eine Kontur 3 aufgedruckt. Diese Kontur kann optional mindestens bereichsweise durch Bedrucken ausgefüllt werden. Es können auch mehrere ineinander verschachtelte Konturen 3, 3i aufgedruckt werden. Auf die Kontur 3 werden dann entsprechend der gewünschten Kontur abgelängte Fasern 4 abgelegt. Bei den gezeigten Ausführungsformen ist die Orientierung der Fasern 4 gleich der Orientierung der Durchläuferfäden 2. Es wäre alternativ auch möglich, dass sich die Orientierung der abgelegten Fasern 4 und der Durchläuferfäden 2 unterscheidet. Das wäre zum Beispiel durch ein Verfahren einzelner Module 31, 61 oder ein Verfahren der Vorrichtung 30, 60 senkrecht zu der Förderrichtung FR während des Ablegens erzielbar.

Optional wird nach dem Ablegen der abgelängten Fasern 4 auf die Kontur 3 die Qualität des Geleges 1 mittels Kameras oder anderer Sensoren geprüft. Abhängig von dem Prüfungsergebnis kann mit einem als Backupsystem dienenden zweiten Faserableger 60 ein fehlerhaftes Gelege "repariert" werden. Dabei wird nur der Teil der Fasern 4, der von der vorherigen Faserablagevorrichtung 30 fehlerhaft oder gar nicht abgelegt wurde, durch die zweite Faserablegevorrichtung abgelegt.

Das Förderband 70 kann bereichsweise in Behandlungszonen unterteilt sein. Dazu können Kühlvorrichtungen und/oder Heizvorrichtungen unter der Förderfläche FF vorgesehen sein. Mittels dieser könnten zum Beispiel Klebstoffe, Binder, Matrixmaterialien oder ähnliches zur Erhöhung oder Verminderung der Viskosität gekühlt oder erwärmt werden. Insbesondere eine Kühlvorrichtung am stromabwärtsgelegenen Ende der Förderfläche FF, die ein entsprechendes Abkühlen eines abgelegten Geleges zum Erleichtern des Ablösens der Förderfläche FF ermöglichen würde, ist eine bevorzugte Variante. Die Durchläuferfäden 2 werden am stromabwärts gelegenen Ende der Förderfläche FF unter Spannung gehalten und das auf den unter Spannung gehaltenen Durchläuferfäden 2 befindliche Gelege 1 kann derart von der darunter nach unten umgelenkten Förderfläche FF abgenommen werden. Danach wird das abgenommene Gelege mit den Durchläuferfäden entweder auf eine Trommel aufgerollt oder auf einem Tisch abgelegt.

Diese Schritte des Erzeugens der Gelege werden je nach der Zahl und der Kontur der benötigten Gelege für den Stack wiederholt. Nach dem Ablegen einer oder mehrerer Gelege werden die Durchläuferfäden 2 entsprechen abgeschnitten. Zur weiteren Handhabung der Gelege ist es ausreichend, die dann immer noch unter den Gelegen befindlichen Abschnitten der Durchläuferfäden 2 zu halten und zu spannen und so die mit einer Kontur versehenen Gelege 1 in beliebigen Orientierungen aufeinanderzustapeln.

Auf diese Art und Weise ist es möglich, ein Faserhalbzeug wie ein MAG nachfolgend beschriebener Art herzustellen. Ein solches Faserhalbzeug weist eine Mehrzahl von Faserlagen (Patches), die übereinandergestapelt sind. Das Faserhalbzeug weist in der Draufsicht eine Gesamtkontur auf. Die einzelnen Faserlagen (Patches) können von der Gesamtkontur abweichende Konturen aufweisen. Das bedeutet, dass grundsätzlich jede Faserlage des konturierten Faserhalbzeugs eine individuelle Kontur aufweisen kann. Natürlich ist es auch möglich, dass alle Faserlagen dieselbe Kontur aufweisen oder dass die Faserlagen teilweise dieselbe und teilweise unterschiedliche Konturen aufweisen. Die Orientierung der Faser der Faserlagen kann frei gewählt werden.

Die Durchläuferfäden können nach der Handhabung der Faserlagen entweder entfernt werden oder auch in dem Faserhalbzeug verbleiben. Bei Verbleib der Durchläuferfäden in dem Faserhalbzeug können diese konturgerecht nach der Handhabung geschnitten werden.

Die Durchläuferfäden können auch als Funktionsfäden ausgebildet sein. Beispiele für solche Fäden in Faserhalbzeugen sind optische Fäden, die in einem späteren Bauteil eine Qualitätskontrolle die Detektion von Beschädigungen ermöglichen. Grundsätzlich sind auch andere Gestaltungen wie magnetische Eigenschaften, elektrische Eigenschaften, etc. solcher als Funktionsfäden verwendeter Durchläuferfäden 2 möglich.

Die entsprechend des Verfahrens herstellbaren konturierten Faserhalbzeuge sind für sich genommen neu und als eigenständiger Gegenstand der Erfindung anzusehen. Sie unterscheiden sich von den bekannten Faserhalbzeugen insbesondere durch die freie Konturierung jeder Faserlage ohne jeden überflüssigen Verschnitt und die Möglichkeit des Einfügens von Durchläuferfäden der gesamten Art.

Es wird explizit betont, dass alle in der Beschreibung und/oder den Ansprüchen offenbarten Merkmale als getrennt und unabhängig voneinander zum Zweck der ursprünglichen Offenbarung ebenso wie zum Zweck des Einschränkens der beanspruchten Erfindung unabhängig von den Merkmalskombinationen in den Ausführungsformen und/oder den Ansprüchen angesehen werden sollen. Es wird explizit festgehalten, dass alle Bereichsangaben oder Angaben von Gruppen von Einheiten jeden möglichen Zwischenwert oder Untergruppe von Einheiten zum Zweck der ursprünglichen Offenbarung ebenso wie zum Zweck des Einschränkens der beanspruchten Erfindung offenbaren, insbesondere auch als Grenze einer Bereichsangabe.

## Patentansprüche

1. Verfahren zum Herstellen eines konturierten Faserhalbzeugs aus mehreren Faserlagen (1) mit den Schritten:
a) Ablegen einer Mehrzahl von parallelen Durchläuferfäden (2) auf eine Förderfläche (FF), die sich in einer Förderrichtung (FR) bewegt;
b) Drucken einer Kontur (3, 3i) einer Faserlage (1) auf die sich mit den Durchläuferfäden (2) bewegende Förderfläche (FF);
c) Ablegen einer Mehrzahl von Fasern (4), die in vorbestimmter Weise entsprechend der gedruckten Kontur abgelängt werden, auf die sich mit den Durchläuferfäden (2) und der gedruckten Kontur (3, 3i) bewegende Förderfläche (FF);
d) Halten der Durchläuferfäden (2) mit der abgelegten Faserlage (1) unter Spannung und Abnehmen der abgelegten Faserlage (1) von der Förderfläche (FF);
e) Wiederholen der Schritte b) bis d) zur Ausbildung weiterer Faserlagen (1); und
f) Stapeln der Faserlagen (1) zu dem konturierten Faserhalbzeug.

2. Verfahren nach Anspruch 1, bei der
in Schritt d) ein Ablegen der Faserlage (1) auf eine Lagerfläche (T, Tᵢ, Tᵢⱼ) auf das Abnehmen einer Faserlage (1) folgt.

3. Verfahren nach Anspruch 1 oder 2, bei dem
die Durchläuferfäden (2) in Förderrichtung (FR) hinter einer abgenommenen Faserlage (1) mit Überstand über die Kontur (3) geschnitten werden.

4. Verfahren nach einem der Ansprüche 1 bis 3, bei dem
Schritt c) in einer ersten Position (P1) in Förderrichtung (FR) ausgerührt wird, das Ergebnis der Ausführung von Schritt c) in einer stromabwärts der ersten Position (P1) gelegenen zweiten Position (P2) mittels eines Sensors überprüft wird und, falls die Überprüfung einen Fehler in der gelegten Faserlage (1) ergibt, an einer dritten Position (P3) in Förderrichtung stromabwärts der zweiten Position (P2) vor dem Ausführen von Schritt d) der Fehler durch ein wenigstens partielles Wiederholen von Schritt c) korrigiert wird.

5. Verfahren nach einem der Ansprüche 1 bis 4, bei dem
die zum Drucken der Kontur (3, 3i) verwendete Substanz ein Klebstoff und/oder ein Binder und/oder ein Matrixmaterial für einen Faserverbundwerkstoff und/oder eine Mischung einer oder mehrerer der genannten Stoffe ist.

6. Verfahren nach einem der Ansprüche 1 bis 5, bei dem
in Schritt d) bei dem Abnehmen die Faserlage auf eine Rolle einer Manipulations-Greifer-Einheit (110) aufgerollt wird oder auf einer Ablage (T, Tᵢ, Tᵢⱼ) abgelegt wird.

7. Verfahren nach einem der Ansprüche 1 bis 6, bei dem
mehrere Faserlagen (1) gleichzeitig hergestellt werden, indem die Schritte b) bis d) für diese gleichzeitig herzustellenden Faserlagen (1) zeitlich parallel und in einer zu der Förderrichtung (FR) senkrechten Richtung nebeneinander ausgeführt werden.

8. Verfahren nach einem der Ansprüche 1 bis 7, bei dem
die Fasern (4) in Schritt c) trocken abgelegt werden und die Geschwindigkeit der Bewegung der Förderfläche (FF) in Förderrichtung (FR) im Bereich von 1 bis 4 m/s liegt.

9. Vorrichtung zum Herstellen eines konturierten Faserhalbzeugs aus mehreren Faserlagen (1), mit
einer in einer Förderrichtung (FR) mit einer vorbestimmten Fördergeschwindigkeit bewegbaren Förderfläche (FF),
einer Durchlauffäden-Zufuhrvorrichtung (10) zum Zuführen einer Mehrzahl von parallelen Durchläuferfäden (2) und Ablegen derselben auf der Förderfläche (FF),
einem Konturdrucker (20) zum Drucken einer Kontur (3, 3i) einer Faserlage (1) auf die Förderfläche (FF),
einer ersten Faserablagevorrichtung (30), die angepasst ist zum Ablängen einer Mehrzahl von Fasern (4) entsprechend der gedruckten Kontur und zum Ablegen der abgelängten Fasern entsprechend der gedruckten Kontur auf die Förderfläche (FF),
eine Durchläuferfäden-Haltevorrichtung (40) zum Halten der Durchläuferfäden einer abgelegten Faserlage (1) unter Spannung,
einer Zwischenlagervorrichtung (T, Tᵢ, Tᵢⱼ) zum Lagern einer von der Förderfläche (FF) abgenommenen Faserlage, und
einer Stapelvorrichtung (Rᵢ) zum Stapeln von Faserlagen (2) zu dem konturierten Faserhalbzeug.

10. Vorrichtung nach Anspruch 9, bei der
die Durchlauffäden-Haltevorrichtung (40) Greifer (45, 46) zum Greifen und Halten der Durchläuferfäden (2) aufweist.

11. Vorrichtung nach Anspruch 9 oder 10, bei der
die Förderfläche (FF) eine Oberfläche eines Förderband (70) ist, das mit einer Geschwindigkeit in Förderrichtung (FR) im Bereich von 1 bis 4 m/s bewegbar ist und das optional in Behandlungszonen entlang der Förderrichtung (FR) unterteilt ist.

12. Vorrichtung nach einem der Ansprüche 9 bis 11, bei der
einer oder mehrere Sensoren (50) zum Prüfen einer abgelegten Faserlage in Förderrichtung (FR) stromabwärts der ersten Position (P1) in einer zweiten Position (P2) vorgesehen sind, und
eine zweite Faserablagevorrichtung (60) in einer in Förderrichtung (FR) stromabwärts der zweiten Position (F2) gelegenen dritten Position (P3) vorgesehen ist, die zum Ablängen und Ablegen von Fasern (4) entsprechend dem Ergebnis der sensorischen Prüfung angepasst ist.

13. Vorrichtung nach einem der Ansprüche 9 bis 12, bei der
die Zwischenlagervorrichtung in Förderrichtung (FR) einen stromabwärts der Förderfläche (FF) angeordneten Tisch (T) aufweist, der optional in einer Richtung senkrecht zur Förderrichtung (FR) in Teiltische (Tᵢ) und/oder in Förderrichtung (FR) in Teiltische (Tᵢⱼ) teilbar ist.

14. Vorrichtung nach einem der Ansprüche 9 bis 13, bei der
die Stapelvorrichtung (Ri) eine oder mehrere Handhabungseinheiten wie Roboter (Ri) aufweist, die zum Abheben einer der gelegten Faserlagen (1) von der Zwischenlagervorrichtung und zum Ablegen derselben auf einem anderen Fasergelege (1) zum Ausbilden eines Stacks (100) angepasst sind.

15. Vorrichtung nach einem der Ansprüche 9 bis 14, bei der
die erste und/oder zweite Faserablagevorrichtung (30, 60) mehrere Faserablagemodule (31,61) aufweist, die jeweils einen Teil der Fasern (4) einer Faserlage (1) ablängen und ablegen können und die separat ansteuerbar und austauschbar sind.

## Claims

1. Method for manufacturing a contoured semi-finished fiber product of plural fiber layers (1), comprising the steps:
a) laying a plurality of parallel passing-through fibers (2) on a conveying surface (FF) moving in a conveying direction (FR);
b) printing a contour (3, 3i) of a fiber layer (1) onto the conveying surface (FF) moving together with the passing-through fibers (2);
c) laying a plurality of fibers (4), which are cut-off in a predetermined manner corresponding to the printed contour, onto the conveying surface (FF) moving together with the passing-through fibers (2) and the printed contour (3, 3i);
d) holding the passing-through fibers (2) with the laid fiber layer (1) under tension and taking the laid fiber layer (1) off the conveying surface (FF),
e) repeating the steps b) to d) for forming additional fiber layers (1); and
f) stacking the fiber layers (1) to the contoured semi-finished fiber product.

2. Method according to claim 1, wherein
in step d), the laying of the fiber layer (1) onto a storing surface (T, Tᵢ, Tᵢⱼ) follows the taking off a fiber layer (1).

3. Method according to claim 1 or 2, wherein
the passing-through fibers (2) are cut behind a taken-off fiber layer (1) with excess length over the contour (3) in the conveying direction (FR).

4. Method according to one of claims 1 to 3, wherein
step c) is performed in a first position (P1) in a conveying direction (FR), the result of performing step c) is checked by means of a sensor in a second position (P2) positioned downstream of the first position (P1), and, if the checking of the laid fiber layer (1) results in an error, the error is corrected by means of at least partially repeating step c) in a third position (P3) positioned downstream in conveying direction of the second position (P2) before performing step d).

5. Method according to one of claims 1 to 4, wherein
the substance used for printing the contour (3, 3i) is an adhesive and/or a binder and/or a matrix material for a fiber composite material and/or a mixture of one or plural of the indicated matters.

6. Method according to one of claims 1 to 5, wherein
the fiber layer is rolled onto a roller of a manipulation-gripping-unit (110) or is laid onto a deposit place (T, Tᵢ, Tᵢⱼ) during taking-off in step d).

7. Method according to one of claims 1 to 6, wherein
plural fiber layers (1) are manufactured simultaneously in that the steps b) to d) are performed for these fiber layers (1) to be manufactured simultaneously in parallel in time and adjacent to each other in a direction perpendicular to the conveying direction (FR).

8. Method according to one of claims 1 to 7, wherein
the fibers (4) are laid in dry state in step c) and the velocity of movement of the conveying surface (FF) in conveying direction (FR) is in the range from 1 to 4 m/s.

9. Apparatus for manufacturing a contoured semi-finished fiber product from plural fiber layers (1), comprising
a conveying surface (FF) movable in a conveying direction (FR) with a predetermined conveying velocity,
a passing-through fiber supplying device (10) for supplying a plurality of parallel passing-through fibers (2) and for laying the same onto the conveying surface (FF),
a contour printer (20) for printing a contour (3, 3i) of a fiber layer (1) onto the conveying surface (FF),
a first fiber laying device (30) adapted for cutting a plurality of fibers (4) corresponding to the printed contour and for laying the cut fibers corresponding to the printed contour onto the conveying surface (FF),
a passing-through fiber holding device (40) for holding the passing-through fibers of a laid fiber layer (1) under tension,
an intermediate storage device (T, Tᵢ, Tᵢⱼ) for storing a fiber layer taken off the conveying surface (FF), and
a stacking device (Rᵢ) for stacking fiber layers (2) to the contoured semi-finished fiber product.

10. Apparatus according to claim 9, wherein
the passing-through fibers holding device (40) comprises grippers (45, 46) for gripping and holding the passing-through fibers (2).

11. Apparatus according to claim 9 or 10, wherein
the conveying surface (FF) is a surface of a conveying belt (70) that is movable with a velocity in conveying direction (FR) in the range of 1 to 4 m/s and that is optionally divided into treatment zones along the conveying direction (FR).

12. Apparatus according to one of claims 9 to 11, wherein
one or plural sensors (50) for checking a laid fiber layer are provided in a second position (P2) downstream of the first position (P1) in conveying direction (FR), and a second fiber laying device (60) is provided in a third position (P3) downstream of the second position (P2) in conveying direction (FR), which is adapted for cutting and laying fibers (4) corresponding to the result of the sensor check.

13. Apparatus according to one of claims 9 to 12, wherein
the intermediate storing device comprises a table (T) arranged downstream of the conveying surface (FF) in conveying direction (FR), which optionally can be divided in sub-tables (Tᵢ) in a direction perpendicular to the conveying direction (FR) and/or in sub-tables (Tᵢⱼ) in a conveying direction (FR).

14. Apparatus according to one of claims 9 to 13, wherein
the stacking device (Ri) comprises one or plural manipulating units like robots (Ri) adapted for taking one of the laid fiber layers (1) off the intermediate storing device and for laying the same onto another fiber layer (1) for forming a stack (100).

15. Apparatus according to one of claims 9 to 14, wherein
the first and/or second fiber laying devices (30, 60) comprise plural fiber laying modules (31, 61), which each can cut and lay a part of the fibers (4) of a fiber layer (1) and which are separately controllable and exchangeable.

## Revendications

1. Procédé de fabrication d'un demi-produit profilé fibreux se composant de plusieurs couches de fibres (1) avec les étapes :
a) dépôt d'une pluralité de fils résistants à la fatigue (2) parallèles sur une surface de transport (FF) qui se déplace dans un sens de transport (FR) ;
b) impression d'un contour (3, 3i) d'une couche de fibres (1) sur la surface de transport (FF) se déplaçant avec les fils résistants à la fatigue (2) ;
c) dépôt d'une pluralité de fibres (4) qui sont coupées à longueur de manière prédéterminée selon le contour imprimé, sur la surface de transport (FF) se déplaçant avec les fils résistants à la fatigue (2) et le contour imprimé (3, 3i) ;
d) maintien des fils résistants à la fatigue (2) avec la couche de fibre déposée (1) sous tension et retrait de la couche de fibre déposée (1), de la surface de transport (FF) ;
e) répétition des étapes b) à d) pour la réalisation d'autres couches de fibres (1) ; et
f) empilement des couches de fibres (1) en demi-produit profilé.

2. Procédé selon la revendication 1, pour lequel
à l'étape d), un dépôt de la couche de fibres (1) sur une surface de palier (T, Tᵢ, Tᵢⱼ) suit le retrait d'une couche de fibres (1).

3. Procédé selon la revendication 1 ou 2, pour lequel les fils résistants à la fatigue (2) sont coupés dans le sens de transport (FR) derrière une couche de fibres (1) retirée avec saillie sur le contour (3).

4. Procédé selon l'une des revendications 1 à 3, pour lequel
l'étape c) est réalisée dans une première position (P1) dans le sens de transport (FR), le résultat de la réalisation de l'étape c) dans une deuxième position (P2) placée en aval de la première position (P1) est vérifié à l'aide d'un capteur et si la vérification produit une erreur dans la couche de fibres posée (1), dans une troisième position (P3) dans le sens de transport en aval de la deuxième position (P2) avant la réalisation de l'étape d), l'erreur est corrigée par une répétition au moins partielle de l'étape c).

5. Procédé selon l'une des revendications 1 à 4, pour lequel
la substance utilisée pour l'impression du contour (3, 3i) est une colle et/ou un liant et/ou un matériau de matrice pour un matériau composite fibreux et/ou un mélange d'une ou de plusieurs des substances citées.

6. Procédé selon l'une des revendications 1 à 5, pour lequel
à l'étape d) lors du retrait, la couche de fibres est enroulée sur un rouleau d'une unité de pince de manipulation (110) ou est déposée sur un dépôt (T, Ti, Tᵢⱼ).

7. Procédé selon l'une des revendications 1 à 6, pour lequel plusieurs couches de fibres (1) sont fabriquées simultanément en ce que les étapes b) à d) pour ces couches de fibres (1) à fabriquer simultanément sont réalisées parallèlement dans le temps et côte à côte dans un sens perpendiculaire au sens de transport (FR).

8. Procédé selon l'une des revendications 1 à 7, pour lequel
les fibres (4) sont déposées à l'étape c) à sec et la vitesse du mouvement de la surface de transport (FF) dans le sens de transport (FR) se trouve dans la plage de 1 à 4 m/s.

9. Dispositif de fabrication d'un demi-produit profilé fibreux composé de plusieurs couches de fibres (1), avec
une surface de transport (FF) mobile dans un sens de transport (FR) à une vitesse de transport prédéterminée,
un dispositif d'amenée de fils résistants à la fatigue (10) pour l'amenée d'une pluralité de fils résistants à la fatigue (2) parallèles et le dépôt de ceux-ci sur la surface de transport (FF),
une imprimante de contour (20) pour l'impression d'un contour (3, 3i) d'une couche de fibres (1) sur la surface de transport (FF),
un premier dispositif de dépôt de fibres (30) qui est adapté pour la coupe à longueur d'une pluralité de fibres (4) selon le contour imprimé et pour le dépôt des fibres coupées à longueur selon le contour imprimé sur la surface de transport (FF),
un dispositif de maintien de fils résistants à la fatigue (40) pour le maintien des fils résistants à la fatigue d'une couche de fibres déposée (1) sous tension,
un dispositif d'entreposage (T, Tᵢ, Tᵢⱼ) pour le stockage d'une couche de fibres retirée de la surface de transport (FF), et
un dispositif d'empilement (Rᵢ) pour l'empilement de couches de fibres (2) en semi-produit profilé fibreux.

10. Dispositif selon la revendication 9, pour lequel
le dispositif de maintien de fils résistants à la fatigue (40) présente des pinces (45, 46) pour la préhension et le maintien des fils résistants à la fatigue (2).

11. Dispositif selon la revendication 9 ou 10, pour lequel la surface de transport (FF) est une surface d'une bande de transport (70) qui est mobile à une vitesse dans le sens de transport (FR) dans la plage de 1 à 4 m/s et qui est divisée en option en zones de traitement le long du sens de transport (FR).

12. Dispositif selon l'une des revendications 9 à 11, pour lequel
un ou plusieurs capteurs (50) sont prévus pour la vérification d'une couche de fibres déposée dans le sens de transport (FR) en aval de la première position (P1) dans une deuxième position (P2), et
un second dispositif de dépôt de fibres (60) dans une troisième position (P3) placée dans le sens de transport (FR) en aval de la deuxième position (F2) est prévu, lequel est adapté pour la coupe à longueur et le dépôt de fibres (4) selon le résultat de la vérification par capteur.

13. Dispositif selon l'une des revendications 9 à 12, pour lequel
le dispositif d'entreposage présente, dans le sens de transport (FR), une table (T) agencée en aval de la surface de transport (FF) qui peut être divisée en option dans un sens perpendiculaire au sens de transport (FR) en tables partielles (Tᵢ) et/ou dans le sens de transport (FR) en tables partielles (Tᵢⱼ).

14. Dispositif selon l'une des revendications 9 à 13, pour lequel
le dispositif d'empilement (Ri) présente une ou plusieurs unités de manipulation tels que des robots (Ri) qui sont adaptés pour le levage d'une des couches de fibres (1) placées, du dispositif d'entreposage et pour le dépôt de celle-ci sur une autre couche de fibres (1) pour la réalisation d'une pile (100).

15. Dispositif selon l'une des revendications 9 à 14, pour lequel
le premier et/ou second dispositif de dépôt de fibres (30, 60) présente plusieurs modules de dépôt de fibres (31, 61) qui coupent à longueur et peuvent déposer respectivement une partie des fibres (4) d'une couche de fibres (1) et qui peuvent être commandés et remplacés séparément.
